# EUROPÄISCHE PATENTSCHRIFT

(11) **EP 0 764 197 B1**
(45) Veröffentlichungstag und Bekanntmachung des Hinweises auf die Patenterteilung: **26.08.1998**
(21) Anmeldenummer: 95921693.8
(22) Anmeldetag: 09.06.1995
(51) Int. Cl.: C10J 3/57, C10J 3/08

(54) **VERFAHREN ZUR HOCHTEMPERATURVERGASUNG HETEROGENER ABFÄLLE**
METHOD FOR THE HIGH-TEMPERATURE GASIFICATION OF HETEROGENEOUS WASTE
PROCEDE DE GAZEIFICATION A HAUTE TEMPERATURE DE DECHETS HETEROGENES

(30) Priorität: 10.06.1994 DE 4420413; 31.03.1995 DE 19512249
(43) Veröffentlichungstag der Anmeldung: 26.03.1997
(73) Patentinhaber: THERMOSELECT AKTIENGESELLSCHAFT, FL-9490 Vaduz (LI)
(72) Erfinder: KISS, Günter, H., CH-6648 Minusio (CH)
(74) Vertreter: Pfenning, Meinig & Partner
(86) Internationale Anmeldenummer: DE9500777
(87) Internationale Veröffentlichungsnummer: WO9534612

(56) Entgegenhaltungen:
- WO-A-86/01131
- DE-C- 4 109 063
- GB-A- 2 099 841
- US-A- 3 920 230

## Beschreibung

Die Erfindung betrifft eine Verfahren zur Vergasung heterogener Abfälle, wie beispielsweise Siedlungsabfälle, die ggf. nach einer mechanisch-thermischen Vorbehandlung, unter Ausschmelzen nicht vergasungsfähiger Bestandteile erfolgt, wobei die Sauerstoffzufuhr zum Vergasungsbett mit Hilfe von sog. Sauerstofflanzen erfolgt.

Sauerstofflanzen im hier bezeichneten Sinne sind wassergekühlte Düsen, mit denen Sauerstoff oder sauerstoffangereicherte Luft in den inneren Brennraum von Vergasungsreaktoren eingedüst wird.

Die Vergasung von Braun- oder Steinkohle in Hochtemperaturreaktoren läßt sich mit Hilfe von Sauerstofflanzen verhältnismäßig problemlos durchführen, da im Strömungsbereich der Lanzen jeweils hinreichend Kohlenstoff für eine Vergasung unter Verbrauch des zugeführten Sauerstoffs vorhanden ist. Hier genügt es, den Sauerstoff durch eine Düse, ggf. durch eine Mehrfachdüse zuzuführen. Die hohen Temperaturen, die im Kernbereich des Vergasers etwa 2.000°C oder mehr betragen, machen eine Kühlung, zweckmäßigerweise eine Wasserkühlung, der Lanze zwingend erforderlich.

Es ist auch bekannt, die Kohlenstoffanteile von Haus- und Industrieabfällen aller Art ggf. nach einer thermischen Vorbehandlung in Hochtemperatur-Reaktoren vollständig zu vergasen, und die dabei anfallenden Schadstoffe im Hochtemperaturbereich des Reaktors thermisch zu zerstören. Ein solches Verfahren ist unter der Bezeichnung "Thermoselect-Verfahren" (DE 41 30 416) bekannt geworden (F.J. Schweitzer "Thermoselect-Verfahren zur Ent- und Vergasung von Abfällen", EF-Verlag für Energie und Umwelttechnik 1994).

Bei dem Betreiben von Hochtemperatur-Reaktoren zur Vergasung von Abfällen liegen grundsätzlich andere Bedingungen vor, als bei der Vergasung von Kohle, vor allem dann, wenn die Abfälle als unsortierte Mischabfälle beliebiger Zusammensetzung vergast und thermisch aufbereitet werden sollen.

Entsprechend der jeweiligen Gegebenheiten und des spezifischen Müllanfalls ist zumindest nicht in der erforderlichen Kontinuität sichergestellt, daß jeweils genügend Kohlenstoff in der Reaktorschüttung, insbesondere im Bereich der Sauerstofflanze, zur Verfügung steht.

Nachteile, die in der Heterogenität der Müllzufuhr von unsortierten Abfällen begründet sind, lassen sich zumindest teilweise ausgleichen durch einen größeren Wirkungsbereich der Sauerstofflanzen. Durch entsprechende Integration der Flammeinwirkung über einen größeren Volumenbereich läßt sich eine positive Verstetigung der Vergasungsbedingungen erreichen. Der stark differierende Anteil auszuschmelzender, nicht vergasbarer Mineralbestandteile im heterogenen Müll erfordert eine zusätzliche Anpassung der thermischen Verhältnisse bezüglich der im Verfahrensablauf umzusetzenden Energie.

Die zur Kohlevergasung verwendeten, bekannten Sauerstofflanzen üblicher Bauart werden den genannten Bedingungen der Abfallvergasung nur ungenügend gerecht.

Trifft beispielsweise der von der Lanze in den Brennraum eingedüste Sauerstoff dort auf Anorganika, findet nicht nur keine Vergasung im Reaktionsraum statt, sondern der Sauerstoff kühlt die Anorganika, die ggf. kurz zuvor noch mindestens teilweise schmelzflüssig waren, ab, bis unter die Schmelztemperatur der Anorganika, wodurch das Gleichgewicht des Vergasungsprozesses empfindlich gestört und der Schmelzaustrag behindert wird.

Solchen Prozeßstörungen könnte dadurch begegnet werden, daß
entweder eine bedarfsabhängige zusätzliche Wärmezufuhr im Bereich der Sauerstofflanzen erfolgt,
oder eine Erhöhung der Strömungsgeschwindigkeit des Sauerstoffs vorgenommen wird. Hierdurch könnte der Einwirkungsbereich im Brennerabschnitt des Reaktors vergrößert werden. Wünschenswert ist auch eine Kombination vorstehend genannter Maßnahmen.

Bei der Vergasung von unsortierten Mischabfällen mit unkontrollierten bzw. unbekannten Inhaltsstoffen kommt es vor, daß Schmelztropfen von Metallen oder mineralischer Schlacke - vorzugsweise bei gedrosselter Sauerstoffzufuhr - die Sauerstofflanze verstopfen und so weitgehend wirkungslos machen.

Die Nachteile herkömmlicher Sauerstofflanzen bei der Vergasung von Mischabfällen in Hochtemperatur-Vergasungsreaktoren lassen sich wie folgt zusammenfassen:
- Eine bedarfsabhängige Wärmezufuhr im Reaktionsbereich des Hochtemperaturreaktors bei Anwesenheit von wechselnden Mengenanteilen nicht oxidierbarer Mineralstoffe ist nicht gegeben.
- Eine den Gleichgewichtsbedingungen des Vergasungsprozesses entsprechende Sauerstoffmenge ist nicht einstellbar.
- Ein Erwärmen des Sauerstoffes vor der Injektion zur Erhöhung der Reaktionsgeschwindigkeit ist nicht oder nur unter großem Sicherheitsrisiko möglich.
- Eine Erhöhung der Strahlgeschwindigkeit des Sauerstoffes ist nur durch eine Drucksteigerung des injizierten Sauerstoffes möglich, die aufwendig und risikoreich ist.

Gegen nicht zu oxidierende Müllbestandteile vor der Lanze ist die herkömmliche Lanze wirkungslos.

Aufgabe der vorliegenden Erfindung ist es daher, ein Verfahren zur Hochtemperaturvergasung heterogener Abfälle unter Ausschmelzen metallischer und mineralischer Bestandteile anzugeben, das den wechselnden Bedingungen der heterogenen Schüttung gerecht wird und mit dem gleichzeitig hocherhitzter Sauerstoff großer Strömungsgeschwindigkeit risikolos anzuwenden ist, wobei der Verfahrensablauf durch nicht oxidierbare Füllungsbestandteile nicht behindert werden soll.

Diese Aufgabe wird erfindungsgemäß durch die im Anspruch 1 angegebenen Merkmale gelöst. Vorteilhafte Ausgestaltungen und Weiterbildungen dieser Aufgabenlösung ergeben sich durch die Unteransprüche.

Durch die Kombination von Sauerstofflanze mit der Pilotflamme entsteht folgende Wechselwirkung:

Die hohe Flammtemperatur und große Brenngeschwindigkeit der Pilotflamme heizt den Lanzensauerstoff extrem auf und beschleunigt ihn ggf. bis auf Überschallgeschwindigkeit.

Die hohe Temperatur des Sauerstoffes erhöht die Vergasungsrate, die starke Beschleunigung des Sauerstoffes vergrößert den Einwirkungsbereich der Lanze entscheidend. Durch dieses stark vergrößerte Wirkvolumen des Sauerstoffes werden zufällig verteilte Inhomogenitäten der Schüttung ausgeglichen, der Lanzensauerstoff erfaßt auch bei starker Schüttinhomogenität in jedem Falle vergasungsfähige Materialbestandteile.

Wird die Pilotflamme unabhängig regelbar vom Lanzensauerstoff betrieben, so kann der Reaktionszone des Hochtemperaturreaktors zusätzlich und dosierbar die Schmelzwärme für anorganische Mineralbestandteile und Metalle zugeführt werden.

Das Zusetzen der Lanze durch "einfrierendes" Schmelzgut aus der Schüttung wird sicher verhindert.

Bei an sich beliebiger Auswahlmöglichkeit für den Brennstoff der Pilotflamme ergeben sich besonders günstige Verhältnisse, wenn prozeßeigenes Synthesegas oder einzelne Bestandteile desselben, bspw. Wasserstoff hierfür verwendet werden. In Verbindung mit Sauerstoff ergibt sich dann eine Knallgasflamme mit einer bezüglich Flammtemperatur und Brenngeschwindigkeit optimaler Prozeßdynamik, insbesondere dann, wenn stöchiometrische Verhältnisse eingehalten werden. Für den Fall, daß für die Pilotflamme reiner Sauerstoff oder ein Sauerstoffgemisch mit einem Sauerstoffanteil von mehr als 90% verwendet wird, wird der Eintrag von Stickstoff in das System vermieden und die Bildung von Stickoxiden minimiert.

Der Wärmeüberschuß der zentral angeordneten Pilotflamme kann, da sie unabhängig vom Sauerstoffdurchsatz der Lanze betrieben wird, direkt zum Aufschmelzen aller nichtoxidierbarer Abfallbestandteile genutzt werden und so dazu beitragen, daß Prozeßstörungen im Reaktionsbereich der Vergasung vermieden werden. Wird bei permanent brennender Pilotflamme der Lanzensauerstoff pulsierend eingetragen, so ergibt sich der Vorteil, daß Kanäle im Vergasungsbett, die der Sauerstoffstrahl der Lanze bilden kann, in den Pulspausen zusammenbrechen.

"Brückenbildung" im Vergasungsbett kann auf diese Weise vermieden werden, im Wirkbereich der Lanzen wird laufend neues, vergasungsfähiges Material bereitgestellt. Die Vergasungsverhältnisse können noch zusätzlich dadurch verbessert und homogenisiert werden, daß mehrere mit pulsierendem Sauerstoffstrom betriebene Lanzen um das Vergasungsbett angeordnet werden und phasenverschoben derart gepulst werden, daß die Vergasungszone zirkuliert. Durch den umlaufenden Wechsel von Kanalbildung und Kanalzusammenbruch im Vergaserbett entsteht dort eine wirbelähnliche quasi-kontinuierliche Materialförderung zum Vergasungsbereich hin.

## Patentansprüche

1. Verfahren zur Hochtemperaturvergasung ggf. thermisch vorbehandelter heterogemer Abfälle, bei dem der Sauerstoff dem Vergasungsbett mit Hilfe wassergekühlter Sauerstofflanzen zugeführt wird,
dadurch **gekennzeichnet,** daß Sauerstofflanzen verwendet werden, die mit mindestens einer permanent brennenden Pilotflamme hoher Flammtemperatur und großer Brenngeschwindigkeit derart ausgerüstet sind, daß der Lanzensauerstoff auf zumindest näherungsweise Schallgeschwindigkeit beschleunigt wird.

2. Verfahren nach Anspruch 1,
dadurch gekennzeichnet, daß die Pilotflamme, vom Lanzensauerstoff unabhängig regelbar, mit prozeßeigenem Synthesegas oder einzelnen Bestandteilen desselben, wie beispielsweise Wasserstoff und mit zumindest mit Sauerstoff angereicherter Verbrennungsluft in näherungsweise stöchiometrischem Verhältnis betrieben wird.

3. Verfahren nach Anspruch 1,
dadurch gekennzeichnet, daß der durch die Pilotflamme vorgegebene Wärmeüberschuß zum Aufschmelzen nicht oxidierbarer Abfallbestandteile verwendet wird.

4. Verfahren nach Anspruch 1,
dadurch gekennzeichnet, daß der Lanzensauerstoff bei permanent brennender Pilotflamme pulsierend eingetragen wird.

5. Verfahren nach Anspruch 1 und 4,
dadurch gekennzeichnet, daß mehrere um das Vergasungsbett angeordnete, mit pulsierend eingetragenem Sauerstoff betriebene Lanzen phasenverschoben derart gepulst werden, daß die Vergasungszone zirkuliert, während der Pulsdauer Kanäle im Vergasungsmaterial bildend, die in den Pulspausen kollabieren, so daß eine rotierende Materialförderung zu dem Vergasungsbereich hin erfolgt.

## Claims

1. Process for the high-temperature gasificiation of heterogeneous, optionally thermally pretreated waste, in which the oxygen is fed to the gasification bed by means of water-cooled oxygen lances, characterized in that oxygen lances are used which are equipped with at least one permanently burning pilot flame having high temperature and a high burning rate in such a way that the lance oxygen is accelerated to at least approximately sonic velocity.

2. Process according to Claim 1, characterized in that the pilot flame is operated, in a manner controllable independently of the lance oxygen, with synthesis gas from the process itself or individual constituents thereof, such as, for example, hydrogen, and with at least oxygen-enriched combustion air, in an approximately stoichiometric ratio.

3. Process according to Claim 1, characterized in that the heat excess resulting from the pilot flame is used for melting non-oxidizable waste constituents.

4. Process according to Claim 1, characterized in that the lance oxygen is introduced in a pulsed manner while the pilot flame is permanently burning.

5. Process according to Claims 1 and 4, characterized in that a plurality of lances arranged around the gasification bed and operated with oxygen introduced in a pulsed manner are pulsed with a phase shift in such a way that the gasification zone circulates, forming channels in the gasification material during the pulse duration, which channels collapse in the pulse intervals, so that a rotating feed of material towards the gasification zone takes place.

## Revendications

1. Procédé de gazéification à haute température de déchets hétérogènes ayant éventuellement subi un traitement thermique préalable, selon lequel de l'oxygène est apporté au lit de gazéification à l'aide de lances à oxygène refroidies par eau, **caractérisé** en ce qu'on utilise des lances à oxygène qui sont équipées d'au moins une flamme pilote à haute température de flamme et grande vitesse de combustion, brûlant en permanence, de telle sorte que l'oxygène de la lance est accéléré au moins approximativement à la vitesse du son.

2. Procédé selon la revendication 1, **caractérisé** en ce qu'on fait fonctionner la flamme pilote avec possibilité de réglage indépendant de l'oxygène de la lance, avec du gaz de synthèse provenant du processus lui-même ou des composants individuels de ce gaz de synthèse, par exemple de l'hydrogène, et avec de l'air de combustion enrichi au moins en oxygène, dans un rapport approximativement stoechiométrique.

3. Procédé selon la revendication 1, **caractérisé** en ce que l'excédent de chaleur alloué par la flamme pilote est utilisé pour la fusion de composants non oxydables des déchets.

4. Procédé selon la revendication 1, **caractérisé** en ce que l'oxygène de la lance est alimenté de façon pulsatoire, tandis que la flamme pilote brûle en permanence.

5. Procédé selon les revendications 1 et 4, **caractérisé** en ce que plusieurs lances, disposées autour du lit de gazéification et fonctionnant à l'oxygène alimenté de façon pulsatoire, sont exploitées de façon pulsatoire en déphasage de telle sorte que la zone de gazéification est mise en circulation, des canaux se formant pendant la durée d'impulsion dans le matériau de gazéification, canaux qui sont rompus pendant les pauses d'impulsion, de sorte qu'on obtient un refoulement rotatif du matériau vers la zone de gazéification.
